# EUROPEAN PATENT APPLICATION

(11) **EP 4 436 056 A1**
(43) Date of publication of application: **25.09.2024**
(21) Application number: 23164066.5
(22) Date of filing: 24.03.2023
(51) Int. Cl.: H04B 7/04, H04B 7/0408, H04B 7/06

(54) **METHOD FOR THE TRANSMISSION AND RECEPTION OF AT LEAST ONE RADIOFREQUENCY SIGNAL BETWEEN, ON THE ONE HAND, AN ANTENNA ENTITY OR FUNCTIONALITY OF A MOBILE COMMUNICATION NETWORK, AND, ON THE OTHER HAND, A FIRST AND A SECOND USER EQUIPMENT, USER EQUIPMENT, ANTENNA ENTITY OR FUNCTIONALITY, SYSTEM OR MOBILE COMMUNICATION NETWORK, PROGRAM AND COMPUTER-READABLE MEDIUM**

(71) Applicant: Deutsche Telekom AG, 53113 Bonn (DE)
(72) Inventor: KLATT, Axel, 50999 Köln (DE)
(74) Representative: Schwöbel, Thilo K.

(57) **Abstract**

The invention relates to a method for the transmission and reception of at least one radiofrequency signal between, on the one hand, an antenna entity or functionality of a mobile communication network, and, on the other hand, a first and a second user equipment, in view of the mobile communication network providing communication services to the first and second user equipment,
wherein the antenna entity or functionality is able to transmit the at least one radiofrequency signal using at least a first antenna lobe and a second antenna lobe, wherein, in order to transmit the at least one radiofrequency signal between the antenna entity or functionality and the first and second user equipment, the method comprises the following steps:
-- in a first step, the antenna entity or functionality transmits the at least one radiofrequency signal, thereby using the first antenna lobe and the second antenna lobe,
-- in a second step, both the first user equipment and the second user equipment receive the same at least one radiofrequency signal, the first user equipment receiving the at least one radiofrequency signal transmitted by means of the first antenna lobe and the second user equipment receiving the at least one radiofrequency signal transmitted by means of the second antenna lobe or by means of the first antenna lobe and the second antenna lobe.

## Description

### BACKGROUND

The present invention relates a method for the transmission and reception of at least one radiofrequency signal between, on the one hand, an antenna entity or functionality of a mobile communication network, and, on the other hand, a first and a second user equipment, in view of the mobile communication network providing communication services to the first and second user equipment, wherein the antenna entity or functionality is able to transmit the at least one radiofrequency signal using at least a first antenna lobe and a second antenna lobe.

Furthermore, the present invention relates to a user equipment for receiving at least one radiofrequency signal from an antenna entity or functionality of a mobile communication network in view of the mobile communication network providing communication services to the user equipment, wherein the antenna entity or functionality is able to transmit the at least one radiofrequency signal using at least a first antenna lobe and a second antenna lobe.

Additionally, the present invention relates to an antenna entity or functionality, especially as part of a base station entity, for the transmission of at least one radiofrequency signal between, on the one hand, an antenna entity or functionality of a mobile communication network, and, on the other hand, a first and a second user equipment, in view of the mobile communication network providing communication services to the first and second user equipment, wherein the antenna entity or functionality is able to transmit the at least one radiofrequency signal using at least a first antenna lobe and a second antenna lobe.

Furthermore, the present invention relates to a system or a mobile communication network for the transmission and reception of at least one radiofrequency signal between, on the one hand, an antenna entity or functionality of a mobile communication network, and, on the other hand, a first and a second user equipment, in view of the mobile communication network providing communication services to the first and second user equipment, wherein the antenna entity or functionality is able to transmit the at least one radiofrequency signal using at least a first antenna lobe and a second antenna lobe.

Furthermore, the present invention relates to a program and to a computer-readable medium for the transmission and reception of at least one radiofrequency signal between, on the one hand, an antenna entity or functionality of a mobile communication network, and, on the other hand, a first and a second user equipment according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies. Such mobile communication networks might be based on terrestrial infrastructures of the radio access network or, alternatively or cumulatively, based on non-terrestrial infrastructure. Terrestrial infrastructures are typically organized throughout a country (or a part thereof, or a region within a country) in a repeating pattern of typically stationary (radio) cells (and associated base station entities) which typically belong to (or are used by or associated or assigned to) a mobile network operator (MNO).

In every conventionally known mobile communication network, an air interface between a user equipment or a mobile station on the one hand, and an antenna entity or functionality (e.g. as part of a base station entity) on the other hand is used - irrespective of whether the base station entity, or the respective antenna entity or functionality, is a terrestrial base station entity or a satellite-based (or even a high-altitude platform-based) base station entity. Via such an air interface - or, using such an air interface - radiofrequency (electro-magnetic) signals are transmitted between the user equipment or mobile station, and the antenna entity or functionality, respectively, either in uplink direction, i.e. transmitted by the user equipment or mobile station (and towards the base station entity), or in downlink direction, i.e. transmitted by the respective base station entity (and towards the user equipment or mobile station.

Furthermore, currently known antenna technology typically involves an antenna (or an antenna arrangement or an antenna array comprising a plurality of antenna elements) to have (or to generate) a plurality of antenna lobes. Typically, the aim is to have (or to generate) at least one main antenna lobe, and to minimize (the strength of) so-called antenna side lobes - i.e. the radiated energy via such side lobes. Antennas or antenna entities or functionalities used for mobile communication as part of mobile communication networks typically do not use such side lobes, i.e. the energy (necessarily) used or emitted or radiated by such side lobes is wasted, and, at least in some circumstances, configurations or situations, even negatively influences operatively used radiofrequency signals and associated communication.

### SUMMARY

An object of the present invention is to provide a technically simple, effective and cost-effective solution for the transmission and reception of at least one radiofrequency signal - both using a first antenna lobe and a second antenna lobe of an antenna entity or functionality of a mobile communication network - between, on the one hand, a first and a second user equipment, and, on the other hand, the antenna entity or functionality of the mobile communication network in view of the mobile communication network providing communication services to the first and second user equipment.
A further object of the present invention is to provide a corresponding user equipment, a corresponding antenna entity or functionality, a corresponding system or mobile communication network, as well as a corresponding program and computer-readable medium.

The object of the present invention is achieved by a method for the transmission and reception of at least one radiofrequency signal between, on the one hand, an antenna entity or functionality of a mobile communication network, and, on the other hand, a first and a second user equipment, in view of the mobile communication network providing communication services to the first and second user equipment, wherein the antenna entity or functionality is able to transmit the at least one radiofrequency signal using at least a first antenna lobe and a second antenna lobe, wherein, in order to transmit the at least one radiofrequency signal between the antenna entity or functionality and the first and second user equipment, the method comprises the following steps:
-- in a first step, the antenna entity or functionality transmits the at least one radiofrequency signal, thereby using the first antenna lobe and the second antenna lobe,
-- in a second step, both the first user equipment and the second user equipment receive the same at least one radiofrequency signal, the first user equipment receiving the at least one radiofrequency signal transmitted by means of the first antenna lobe and the second user equipment receiving the at least one radiofrequency signal transmitted by means of the second antenna lobe or by means of the first antenna lobe and the second antenna lobe.

It is thereby advantageously possible according to the present invention to use both the first and the second antenna lobe of the antenna entity or functionality (of, typically, the base station entity used).
The usual entities providing radio coverage within a mobile communication network are called base station entities. Such base station entities necessarily need to comprise, or to be associated with or to be assigned to, antennas or antenna entities or functionalities in order to transmit and to receive radiofrequency signals towards or from other entities or elements of such a mobile communication network, especially user equipments or mobile stations (typically located within a radio cell, i.e. a geographical area served by the considered base station entity).
Such antenna entities or functionalities typically generate - in order to transmit a considered radiofrequency signal in downlink direction towards a user equipment or mobile station - more than one antenna lobe, i.e. the total (electromagnetic) energy, radiated by a considered antenna entity or functionality, is not transmitted uniformly in all directions, but there is at least a first direction where the local maximum of the radiated energy (or signal strength) is (especially significantly) higher compared to the local maximum of the radiated energy (or signal strength) in another direction.
According to the present invention, it is assumed that a first antenna lobe and at least a second antenna lobe is actively used for operatively transmitting radiofrequency signals (especially: at least one radiofrequency signal) towards a user equipment or mobile station.
Different use cases or scenarios are contemplated according to the present invention: According to one use case or scenario, the at least one radiofrequency signal is transmitted by (or via) the first antenna lobe having a significantly higher signal strength (regarding the respective radiation direction and regarding a local signal strength maximum) compared to the (same) radiofrequency signal being transmitted by (or via) the second antenna lobe, i.e. the second antenna lobe has a significantly lower signal strength regarding its respective radiation direction and regarding its local signal strength maximum); hence, according to such a scenario, one could speak of the first antenna lobe corresponding to the main antenna lobe and the second antenna lobe corresponding to a side antenna lobe.
According to another use case or another scenario, the first and (at least) second antenna lobe are of roughly equal (or, at least, comparable) signal strength (regarding their respective radiation directions and regarding their respective local signal strength maximum); hence, according to such a scenario, one could speak of two antenna main lobes.
It is to be understood that, besides the first and (at least) second antenna lobes, further (main or side) antenna lobes might also be operatively used according to the present invention, i.e. for transmitting the at least one radiofrequency signal to further user equipments.
Of course, according to the present invention, a considered antenna entity or functionality typically has (or will generate), besides the first and at least second (operatively used) antenna lobes, further (side) antenna lobes that are, typically, of a still further reduced signal strength and that are not operatively used to transmit the at least one radiofrequency signal to further user equipments.

According to the present invention it is to be understood that it is one an the same (at least one) radiofrequency signal that is (simultaneously) transmitted, by the antenna entity or functionality, towards the first user equipment and towards the second user equipment. As the very purpose of an antenna entity or functionality is to transmit a radiofrequency signal towards a (first) user equipment, the method according to the present invention might also be stated such that it is a method for the transmission (and the reception) of at least one radiofrequency signal between a (second) user equipment and an antenna entity or functionality of a mobile communication network in view of the mobile communication network providing communication services to the first and second user equipment, wherein the antenna entity or functionality is able to transmit the at least one radiofrequency signal, using a second antenna lobe, towards the (second) user equipment, and, besides that also operatively using a first antenna lobe (to operatively transmit the at least one radiofrequency signal towards the (first) user equipment, wherein, in order to transmit the at least one radiofrequency signal operatively using both the first and second antenna lobe of the antenna entity or functionality (i.e. towards the first and second user equipment), the method comprises the following steps:
-- in a first step, the antenna entity or functionality transmits the at least one radiofrequency signal, thereby using the first antenna lobe and the second antenna lobe,
-- in a second step, the second user equipment receives the at least one radiofrequency signal transmitted by means of at least the second antenna lobe.
Hence, according to the present invention, it is important that the second antenna lobe is used to operatively transmit the at least one radiofrequency signal towards the (second) user equipment (as, typically, a first antenna lobe (that any antenna entity or functionality is configured to have or to generate) is in any case used to operatively transmit such radiofrequency signals).

Hence, it is advantageously possible, according to the present invention, to not only (operatively) use the first antenna lobe to transmit radiofrequency signals but also (at least) the second antenna lobe. This advantageously provides the possibility to not completely waste the (electromagnetic) energy radiated by means of (or via) the (at least) second antenna lobe. Furthermore, it is advantageously possible to reduce interference effects caused by the (at least) second antenna lobe, specifically with an optimized antenna lobe design, aiming for interference minimization.

According to the present invention, at least one radiofrequency signal is transmitted by the antenna entity or functionality, thereby using both the first antenna lobe and (at least) the second antenna lobe, i.e. one and the same radiofrequency signal is transmitted using both the first antenna lobe and (at least) the second antenna lobe. This at least one radiofrequency signal is (operatively) received, by a user equipment, using (at least) the second antenna lobe; this user equipment is hereinafter also called the second user equipment (as, typically, the antenna entity or functionality also has - besides the (at least) second antenna lobe - a first antenna lobe that is operatively used to transmit the radiofrequency signal towards a user equipment which is, hereinafter, also called the first user equipment. Hence, both the first user equipment and the second user equipment receive the same at least one radiofrequency signal, the first user equipment receiving the at least one radiofrequency signal transmitted by means of the first antenna lobe and the second user equipment receiving the at least one radiofrequency signal transmitted by means of the second antenna lobe.
In a further embodiment of the present invention, again both the first user equipment and the second user equipment receive the same at least one radiofrequency signal - with the first user equipment receiving the at least one radiofrequency signal transmitted by means of the first antenna lobe - but the second user equipment receives the at least one radiofrequency signal transmitted by means of both the first antenna lobe and the second antenna lobe. This is, e.g., possible by means of using a reflection (e.g. by means of using a reconfigurable intelligent surface) such that the (same) radiofrequency signal - transmitted by means of the first antenna lobe - also arrives at the location of the second user equipment (in which situation only the second user equipment might be present or required, or, the first and second user equipment might be one single user equipment).

According to the present invention, a base station entity is provided with at least one antenna entity or functionality (but preferably, the base station entity is provided with more than one antenna entities or functionalities), the at least one antenna entity or functionality (of the base station entity) is either a terrestrial antenna entity or functionality or a non-terrestrial (especially satellite-based) antenna entity or functionality (i.e. located onboard a satellite or a high-altitude platform). The base station entity is able to serve (i.e. providing communication services to) considered user equipments by means of or using the at least one antenna entity or functionality - typically using a service (radio) link towards and/or from the user equipments in order to realize downlink and/or uplink data transmissions, thereby transmitting (and/or receiving) radiofrequency signals.

According to the present invention, it is advantageously possible and preferred that the transmission and reception of the at least one radiofrequency signal involves using conventional reflectors or reflective surfaces and/or at least one reconfigurable intelligent surface, RIS, wherein the at least one reconfigurable intelligent surface is able to be located and/or controlled such that the at least one radiofrequency signal is able to be received by the first user equipment and/or by the second user equipment, wherein especially a first reconfigurable intelligent surface or a first conventional reflector or a first reflective surface is used such that the radiofrequency signal is able to be received by the first user equipment and/or a second reconfigurable intelligent surface or a second conventional reflector or a second reflective surface is used such that the radiofrequency signal is able to be received by the second user equipment.

It is thereby advantageously possible to realize more efficient and/or more adapted and/or more adaptable transmission conditions for the transmission of radiofrequency signals between either one antenna entity or functionality and connected (or served) user equipments or between a plurality of antenna entities or functionalities and connected (or served) user equipments.
Especially in the context of the evolution of 5G to 5G-Advanced and especially 6G, new approaches for coverage extension are discussed that especially involve metamaterials or more advanced "radio intelligent surfaces" or "reconfigurable intelligent surfaces" (RIS), allowing controllable and/or steerable reflections of incoming communication or radiofrequency signals similar to optics with mirrors to enable covering uncovered areas, especially to guide radiofrequency (electromagnetic) waves around corners for example. The main principle behind reconfigurable intelligent surfaces is the usage of a steerable beam originating, e.g., from a massive MIMO antenna, for example in 5G or 6G, from a base station entity or gNB and the additional installation of reconfigurable intelligent surface elements at appropriate places (e.g. buildings) for reflecting and/or redirecting the incoming communication (radiofrequency) signals in a suitable manner. The typical setup is that a steerable beam from a base station entity or gNB with its main lobe hits the reconfigurable intelligent surface and results in a reflected signal in a suitable or advantageous direction; the angle can especially be fixed by the reconfigurable intelligent surface or with more advanced reconfigurable intelligent surface elements, the angle is even able to be steered. Simpler reconfigurable intelligent surfaces allow only semi-dynamic changes of the outgoing angle, while highly dynamic reconfigurable intelligent surfaces being also possible.

According to the present invention, it is advantageously furthermore possible and preferred that, in a third step preceding the first step, the antenna entity or functionality is controlled or configured such that the transmission power of the second antenna lobe relative to the transmission power of the first antenna lobe is sufficient to provide radio coverage to the second user equipment, either by means of providing such radio coverage directly or by means of via the second reconfigurable intelligent surface or the second conventional reflector or the second reflective surface,
wherein especially the angular distribution of transmitted power of the first and second antenna lobe is modified.

It is thereby advantageously possible to implement the present invention comparatively easily and efficiently.

According to the present invention, it is furthermore advantageously possible and preferred that the first antenna lobe corresponds to the main lobe of the antenna entity or functionality and wherein the second antenna lobe corresponds to a side lobe of the antenna entity or functionality,
wherein the peak transmitted power of the first antenna lobe exceeds the peak transmitted power of the second antenna lobe, wherein especially the ratio of peak transmitted power of the first antenna lobe and peak transmitted power of the second antenna lobe is comprised between 20 and 1, preferably between 10 and 1, more preferably between 7 and 1, still more preferably between 5 and 1, still more preferably between 4 and 1, still more preferably between 3 and 1.

It is thereby advantageously possible to implement the present invention comparatively easily and efficiently. Especially, it is advantageously possible according to the present invention to operatively use the radiated power of (also) the second antenna lobe.

According to the present invention, it is furthermore advantageously possible and preferred that the first and second antenna lobes correspond to two main lobes of the antenna entity or functionality,
wherein the peak transmitted power of the first antenna lobe is roughly equal to the peak transmitted power of the second antenna lobe.

It is thereby advantageously possible to implement the present invention comparatively easily and efficiently. Especially, it is advantageously possible according to the present invention to operatively use the radiated power of (also) the second antenna lobe.

According to the present invention, it is furthermore advantageously possible and preferred that the antenna entity or functionality and/or at least the first and/or second reconfigurable intelligent surface and/or the first and/or second conventional reflector and/or the first and/or second reflective surface are controlled or configured - especially realizing phase shifting of the at least one radiofrequency signal by means of the first and/or second reconfigurable intelligent surface and/or the first and/or second conventional reflector and/or the first and/or second reflective surface - such that radio coverage is provided, using both the first and second antenna lobes and especially with at least the first and/or second reconfigurable intelligent surface and/or the first and/or second conventional reflector and/or the first and/or second reflective surface, to the first and second user equipments,
wherein especially such controlling and/or configuring of the antenna entity or functionality and/or of at least the first and/or second reconfigurable intelligent surface and/or the first and/or second conventional reflector and/or the first and/or second reflective surface is realized using artificial intelligence mechanisms, especially machine learning algorithms, especially comprising supervised learning and/or unsupervised learning and/or reinforcement learning.

It is thereby advantageously possible to implement the present invention comparatively easily and efficiently, and especially in a flexible and adaptable manner.

According to the present invention, it is furthermore advantageously possible and preferred that the antenna entity or functionality and/or at least the first and/or second reconfigurable intelligent surface and/or the first and/or second conventional reflector and/or the first and/or second reflective surface are controlled or configured such that, at a specific location of the first and/or the second user equipment,
-- either a constructive interference of the at least one radiofrequency signal using at least the first antenna lobe and the second antenna lobe, -- or a destructive interference of the at least one radiofrequency signal using at least the first antenna lobe and the second antenna lobe,
   is realized.

It is thereby advantageously possible to implement the present invention comparatively easily and efficiently, and especially in a flexible and adaptable manner.

According to the present invention, it is furthermore advantageously possible and preferred that the antenna entity or functionality is able to receive, from the first and/or second user equipment, at least one further radiofrequency signal using at least the first antenna lobe and the second antenna lobe.

Furthermore, the present invention relates to a user equipment for receiving at least one radiofrequency signal from an antenna entity or functionality of a mobile communication network in view of the mobile communication network providing communication services to the user equipment, wherein the antenna entity or functionality is able to transmit the at least one radiofrequency signal using at least a first antenna lobe and a second antenna lobe, wherein, in order to receive the at least one radiofrequency signal from the antenna entity or functionality, the user equipment is configured such that:
-- the at least one radiofrequency signal is transmitted, using the first antenna lobe and the second antenna lobe, by the antenna entity or functionality and received by the user equipment,
-- the user equipment receives the at least one radiofrequency signal transmitted by means of the second antenna lobe or by means of the first antenna lobe and the second antenna lobe.

Furthermore, the present invention relates to an antenna entity or functionality, especially as part of a base station entity, for the transmission of at least one radiofrequency signal between, on the one hand, an antenna entity or functionality of a mobile communication network, and, on the other hand, a first and a second user equipment, in view of the mobile communication network providing communication services to the first and second user equipment, wherein the antenna entity or functionality is able to transmit the at least one radiofrequency signal using at least a first antenna lobe and a second antenna lobe, wherein, in order to transmit the at least one radiofrequency signal between the antenna entity or functionality and the first and second user equipment, the antenna entity or functionality is configured such that:
-- the antenna entity or functionality transmits the at least one radiofrequency signal, thereby using the first antenna lobe and the second antenna lobe,
-- both the first user equipment and the second user equipment receive the same at least one radiofrequency signal, the first user equipment receiving the at least one radiofrequency signal transmitted by means of the first antenna lobe and the second user equipment receiving the at least one radiofrequency signal transmitted by means of the second antenna lobe or by means of the first antenna lobe and the second antenna lobe.

Furthermore, the present invention relates to a system or to a mobile communication network for the transmission and reception of at least one radiofrequency signal between, on the one hand, an antenna entity or functionality of a mobile communication network, and, on the other hand, a first and a second user equipment, in view of the mobile communication network providing communication services to the first and second user equipment, wherein the antenna entity or functionality is able to transmit the at least one radiofrequency signal using at least a first antenna lobe and a second antenna lobe, wherein, in order to transmit the at least one radiofrequency signal between the antenna entity or functionality and the first and second user equipment, the system or mobile communication network is configured such that:
-- the antenna entity or functionality transmits the at least one radiofrequency signal, thereby using the first antenna lobe and the second antenna lobe,
-- both the first user equipment and the second user equipment receive the same at least one radiofrequency signal, the first user equipment receiving the at least one radiofrequency signal transmitted by means of the first antenna lobe and the second user equipment receiving the at least one radiofrequency signal transmitted by means of the second antenna lobe or by means of the first antenna lobe and the second antenna lobe.

Additionally, the present invention relates to a program comprising a computer readable program code which, when executed on a computer and/or on an antenna entity or functionality of a mobile communication network and/or on a base station entity of a mobile communication network and/or on a network node of a mobile communication network, or in part on an antenna entity or functionality and/or in part on a base station entity and/or in part on a network node of a mobile communication network, causes the computer and/or the antenna entity or functionality and/or the base station entity and/or the network node of the mobile communication network to perform the inventive method.

Still additionally, the present invention relates to a computer-readable medium comprising instructions which when executed on a computer and/or on an antenna entity or functionality of a mobile communication network and/or on a base station entity of a mobile communication network and/or on a network node of a mobile communication network, or in part on an antenna entity or functionality and/or in part on a base station entity and/or in part on a network node of a mobile communication network, causes the computer and/or the antenna entity or functionality and/or the base station entity and/or the network node of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

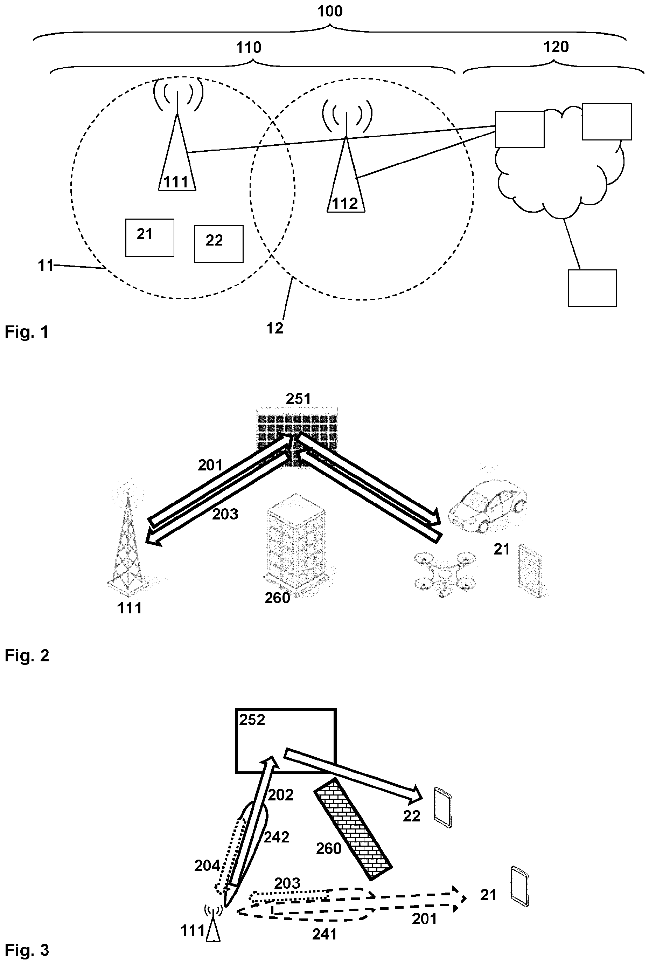

Figure 1 schematically illustrates the situation of a first user equipment and a second user equipment in a mobile communication network, the user equipment being served by a base station entity having at least an antenna entity or functionality.
Figure 2 schematically illustrates the situation of a radiofrequency signal being transmitted in downlink direction from a base station entity, i.e. an antenna entity or functionality thereof or associated therewith, towards a user equipment using (or via) a reconfigurable intelligent surface, wherein furthermore, a further radiofrequency signal being transmitted in uplink direction from the user equipment towards the base station entity, i.e. the antenna entity or functionality thereof or associated therewith, likewise using (or via) the reconfigurable intelligent surface.
Figure 3 schematically illustrates the antenna entity or functionality having or generating a first antenna lobe and a second antenna lobe, wherein both the first and the second antenna lobes are operationally used to transmit a radiofrequency signal towards a first user equipment and towards a second user equipment, towards the first user equipment directly, and towards the second user equipment via a second reconfigurable intelligent surface.

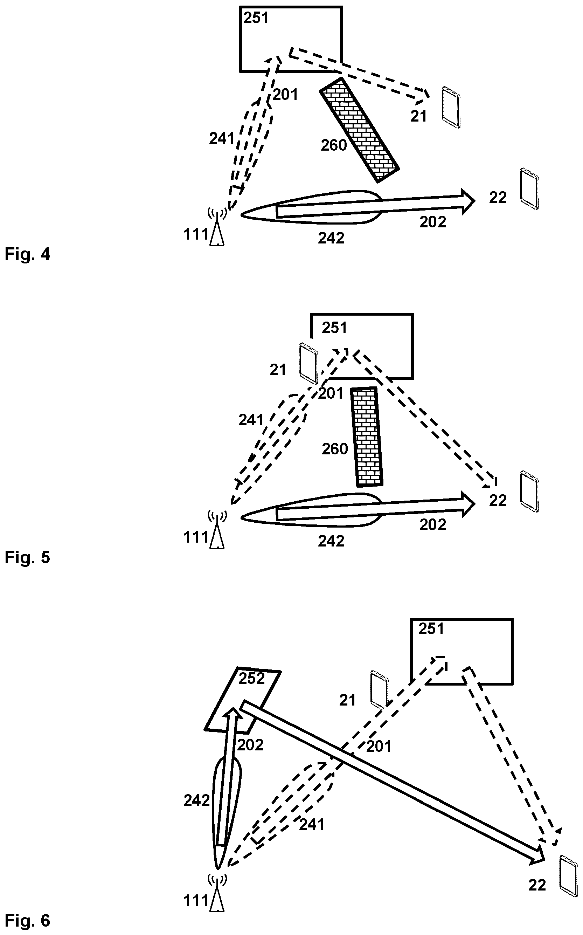

Figure 4 schematically illustrates the antenna entity or functionality having or generating the first antenna lobe and the second antenna lobe, wherein both the first and the second antenna lobes are operationally used to transmit the radiofrequency signal towards the first user equipment and towards the second user equipment, towards the first user equipment via a first reconfigurable intelligent surface, and towards the second user equipment directly.
Figure 5 schematically illustrates the antenna entity or functionality having or generating the first antenna lobe and the second antenna lobe, wherein both the first and the second antenna lobes are operationally used to transmit the radiofrequency signal towards the first user equipment and towards the second user equipment also directly and, as well, via the first reconfigurable intelligent surface
Figure 6 schematically illustrates the antenna entity or functionality having or generating the first antenna lobe and the second antenna lobe, wherein both the first and the second antenna lobes are operationally used to transmit the radiofrequency signal towards the first user equipment and towards the second user equipment, towards the first user equipment directly, and towards the second user equipment via both the first and the second reconfigurable intelligent surfaces.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 is schematically shown, the telecommunications network 100 comprising an access network 110, and a core network 120. Furthermore, Figure 1 schematically illustrates the situation of a first user equipment 21 and a second user equipment 22 in the mobile communication network 100, the user equipments 21, 22 being served by a base station entity 111 having at least an antenna entity or functionality.
The telecommunications network 100 is especially realized as a mobile (cellular) communication network 100 (and is, hereinafter and at least partly, also called like this). The telecommunications network 100, especially the core network 120, typically comprises a number of network functions or services; however, such network functions or services are not explicitly indicated by means of reference signs in Figure 1.

The access network 110 comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, both the first and the second user equipment 21, 22 are connected to the telecommunications network 100 via a radio interface to the first base station entity 111. The user equipment 20 is typically, but not necessarily, mobile - i.e. able to move - with respect to the - typically, but not necessarily, static - radio cells 11, 12 or corresponding base station entities 111, 112 of the access network 110. The first and second base station entities 111, 112 comprise, respectively at least one antenna entity or functionality. In the following, the terms base station entity 111 and antenna entity or functionality 111 are both designated by means of reference sign 111 (or 112 regarding the second base station entity 112).

In Figure 2, the situation of the first user equipment 21 is schematically shown: a radiofrequency signal 201 being transmitted in downlink direction from the base station entity 111, i.e. an antenna entity or functionality 111 thereof or associated therewith, towards the (first) user equipment 21 using (or being transmitted via) a reconfigurable intelligent surface, RIS, (or first reconfigurable intelligent surface 251). Furthermore, a further radiofrequency signal 203 is transmitted in uplink direction from the (first) user equipment 21 towards the base station entity 111 - i.e. the antenna entity or functionality 111 thereof or associated therewith - the further radiofrequency signal 203 likewise using (or being transmitted via) the (first) reconfigurable intelligent surface 251. An obstacle 260 (located between the antenna entity or functionality 111 and the (first) user equipment 21) is schematically shown, the obstacle 260 impeding the direct transmission (or reception) of the radiofrequency signal 201 in downlink direction at the location of the (first) user equipment 21 (and, likewise, also impeding the direct transmission (or reception) of the further radiofrequency signal 203 in uplink direction at the location of the antenna entity or functionality 111).

According to the present invention, the antenna entity or functionality 111 is able to transmit at least one (downlink) radiofrequency signal using at least a first antenna lobe and a second antenna lobe. This is schematically shown, according to different examples and/or different (transmission and/or reception) scenarios in Figures 3 to 6: All these Figures schematically illustrate the antenna entity or functionality 111 having or generating the first antenna lobe 241 and the second antenna lobe 242, wherein both the first and the second antenna lobes 241, 242 are operationally used to transmit a radiofrequency signal 201, 202 towards the first user equipment 21 and towards the second user equipment 22. The radiofrequency signal is indicated by means of reference signs 201 and 202 in order to schematically illustrate that, so to say a first 'part' 201 of the (same) radiofrequency signal is transmitted, by the antenna entity or functionality 111, using its first antenna lobe 241, and that, so to say a second 'part' 202 of the (same) radiofrequency signal is transmitted, by the antenna entity or functionality 111, using its second antenna lobe 242. However, it would be somehow misleading to speak of different 'signal parts'; rather it would be (more) sensible to speak of different parts of radiated energy (via, or using, the first or second antenna lobes 241, 242) when transmitting the same radiofrequency signal 201, 202. The at least one radiofrequency signal 201, 202 corresponds to a downlink radiofrequency signal, transmitted by the antenna entity or functionality 111, and received by the first and/or second user equipment 21, 22.
In all these Figures, the first antenna lobe 241 is represented using a dashed line, and the radiofrequency signal 201 transmitted using the first antenna lobe 241 is represented using a dashed arrow. Furthermore, in all these Figures, the second antenna lobe 242 is represented using a drawn-through line, and the radiofrequency signal 202 transmitted using the second antenna lobe 242 is represented using a drawn-through arrow.
In Figure 3, also a further radiofrequency signal 203, 204 is schematically indicated (by means of dotted arrows), the further radiofrequency signal 203, 204 corresponding to an uplink radiofrequency signal, transmitted by the first and/or second user equipment 21, 22, and received by the antenna entity or functionality 111.

In Figure 3, both the first and the second antenna lobes 241, 242 are operationally used to transmit the radiofrequency signal 101, 102 towards the first user equipment 21 and towards the second user equipment 22, towards the first user equipment 21 directly, and towards the second user equipment 22 via a second reconfigurable intelligent surface 252 (as an obstacle 260 - e.g. a building - is schematically shown to prevent a direct transmission of the radiofrequency signal 102, using the second antenna lobe 242, towards the second user equipment 22).

In Figure 4, again both the first and the second antenna lobes 241, 242 are operationally used to transmit the radiofrequency signal 101, 102 towards the first user equipment 21 and towards the second user equipment 22, towards the first user equipment 21 via a first reconfigurable intelligent surface 251 (as, again, an obstacle 260 - e.g. a building - is schematically shown to prevent a direct transmission of the radiofrequency signal 101, using the first antenna lobe 241, towards the first user equipment 21), and towards the second user equipment 22 directly.

In Figure 5, again both the first and the second antenna lobes 241, 242 are operationally used to transmit the radiofrequency signal 101, 102 towards the first user equipment 21 and towards the second user equipment 22, towards the first user equipment 21 directly, and towards the second user equipment 22 also directly and, as well, via the first reconfigurable intelligent surface 251 (as, again, the obstacle 260 - e.g. a building - is schematically shown to prevent a direct transmission of the radiofrequency signal 101, using the first antenna lobe 241, towards the second user equipment 22).

In Figure 6, again both the first and the second antenna lobes 241, 242 are operationally used to transmit the radiofrequency signal 101, 102 towards the first user equipment 21 and towards the second user equipment 22, towards the first user equipment 21 directly, and towards the second user equipment 22 via both the first and the second reconfigurable intelligent surfaces 251, 252.

Hence, according to the present invention, a method is suggested for the transmission and reception of the at least one radiofrequency signal 201, 202 between, on the one hand, a first and a second user equipment 21, 22, and, on the other hand, an antenna entity or functionality 111 of the mobile communication network 100 in view of the mobile communication network 100 providing communication services to the first and second user equipment 21, 22.
Especially according to the present invention, both the first and the second antenna lobes 241, 242 of the antenna entity or functionality 111 are used simultaneously to transmit the at least one radiofrequency signal 201, 202.

As the examples and use cases show (Figures 3 to 6), after the antenna entity or functionality 111 having transmitted (or while the antenna entity or functionality 111 transmitting) the at least one radiofrequency signal 201, 202 using both the first and second antenna lobes 241, 242, especially the second user equipment 22 receives (besides the first user equipment 21 receiving the at least one radiofrequency signal 201, 202) the same at least one radiofrequency signal 201, 202. Besides the first user equipment 21 receiving the at least one radiofrequency signal 201, 202 transmitted by means of the first antenna lobe 241, the second user equipment 22 also operationally receives the at least one radiofrequency signal 201, 202 transmitted by means of at least the second antenna lobe 242, i.e. either (only) by means of the second antenna lobe 242 or by means of both the first antenna lobe 241 and the second antenna lobe 242.

By means of the present invention, it is advantageously possible to make a positive use of the unavoidable side-lobes (i.e. to operatively use (also) the second antenna lobe 242) generated by the antenna entity or functionality 111 (i.e. of the base station entity or gNB), i.e. the generated beam for transmitting the at least one radiofrequency signal 201, 202. Hence, it is advantageously possible to utilize the power of the side-lobes, which can still be - depending on the antenna design pattern - quite powerful. Thus, according to the present invention, it is advantageously possible to actively steer such additional antenna lobes (i.e. in addition to the first antenna lobe 241, or main lobe) to the point of interest (i.e. a user equipment - especially the second user equipment 22) in addition to the main lobe (being steered or directed to the first user equipment 21) in order to create additional energy directivity towards the desired place covered by the main lobe. In contrast to the conventionally known, and typically unwanted necessary generation of side lobes of an antenna area (where normally the aim is to avoid or at least minimize them as much as possible in order to not create unwanted side effects in terms of unwanted interference), the suggested approach according to the present invention is able to be used to configure the antenna entity or functionality 111 in a way that the creation of the sidelobes (or: of the second antenna lobe 242) is used to provide additional means of using such antennas to optimize the radio coverage area of a mobile communication network 100 using such antenna entities or functionalities 111. In other words the side lobes (or: the second antenna lobe 242) do not necessarily need to be of significant lower gain compared to the main lobe (or: first antenna lobe 241).

Also, the directivity is able to be different depending on the usage scenario, i.e. it is also possible to use the side-lobe only to create an additional coverage area independently of the main-lobe (and a first reconfigurable intelligent surface 251). According to the present invention, this is able to be achieved by appropriate antenna pattern design (selection of geometry and materials).

Furthermore, according to the present invention, the arrangement is susceptible to either be a very planned one, where the additional reconfigurable intelligent surfaces 251, 252 for the side-lobe 242 is additionally placed at a specific predefined location. Alternatively, according to the present invention, a dynamic randomized usage is susceptible to be used, e.g. of additional reconfigurable intelligent surfaces for the side-lobes 242. For the latter - assuming a rather numerous amount of reconfigurable intelligent surfaces are present in a geographic area like a street canyon -, the selection of reconfigurable intelligent surfaces for side-lobe usage or the configuration of the reconfigurable intelligent surfaces (e.g. the selection of phase shifts) is able to be based on artificial intelligence (Al) and machine learning (ML) algorithms, especially using supervised learning and/or unsupervised learning and/or reinforcement learning algorithms that "learn" the wireless environment and select the target reconfigurable intelligent surface depending on the use case.

According to the present invention, it is proposed to operationally also use - besides the first antenna lobe 241 - also the side-lobes (i.e. at least the second antenna lobe 242) for the creation of either additional energy at the same area as the main-lobe via a first reconfigurable intelligent surface 251, while the side-lobe uses a second reconfigurable intelligent surface 252, but could also be intended to thereby indepentently create additional coverage. For the case of a first reconfigurable intelligent surface 251 providing coverage in a first coverage area and an additional second reconfigurable intelligent surface 252 for providing coverage in a second coverage area using the second antenna lobe 242 (i.e., in this case, at least a first side lobe) and the said antenna entity or functionality 111, the first and the second reconfigurable intelligent surface 251, 252 needs to be actively coordinated (or controlled) or at least mechanically arranged to provide the desired outcome. With such an arrangement of more than one reconfigurable intelligent surface 251, 252 using at least one side-lobe of the radiating antenna, it is advantageously possible, according to the present invention:
-- to create additional coverage areas created by the side lobe (or at least second antenna lobe 242),
-- to create additional constructive signals at the wanted (first) coverage area,
-- to create subtractive signals at the wanted (first) coverage area to minimize or avoid interference, or
-- any combination of these possibilities.

Signaling for controlling the reconfigurable intelligent surfaces 251, 252 and their configuration might be needed to let the antenna entity or functionality 111 as well as the different reconfigurable intelligent surfaces 251, 252, work together in a coordinated manner. One aspect to create additive or subtractive signals is based on the appropriate phase shift of the reconfigurable intelligent surface elements.

In addition, it is proposed, according to the present invention, to use or to provide a reconfigurable intelligent surface controller entity which has the role to coordinate and steer the relevant configuration between the antenna entity or functionality 111 and the reconfigurable intelligent surfaces 251, 252 to achieve the desired behavior.

## Claims

1. Method for the transmission and reception of at least one radiofrequency signal (201, 202) between, on the one hand, an antenna entity or functionality (111) of a mobile communication network (100), and, on the other hand, a first and a second user equipment (21, 22), in view of the mobile communication network (100) providing communication services to the first and second user equipment (21, 22),
wherein the antenna entity or functionality (111) is able to transmit the at least one radiofrequency signal (201, 202) using at least a first antenna lobe (241) and a second antenna lobe (242),
wherein, in order to transmit the at least one radiofrequency signal (201, 202) between the antenna entity or functionality (111) and the first and second user equipment (21, 22), the method comprises the following steps:
-- in a first step, the antenna entity or functionality (111) transmits the at least one radiofrequency signal (201, 202), thereby using the first antenna lobe (241) and the second antenna lobe (242),
-- in a second step, both the first user equipment (21) and the second user equipment (22) receive the same at least one radiofrequency signal (201, 202), the first user equipment (21) receiving the at least one radiofrequency signal (201, 202) transmitted by means of the first antenna lobe (241) and the second user equipment (22) receiving the at least one radiofrequency signal (201, 202) transmitted by means of the second antenna lobe (242) or by means of the first antenna lobe (241) and the second antenna lobe (242).

2. Method according to claim 1, wherein the transmission and reception of the at least one radiofrequency signal (201, 202) involves using conventional reflectors or reflective surfaces and/or at least one reconfigurable intelligent surface, RIS, (251, 252), wherein the at least one reconfigurable intelligent surface (251, 252) is able to be located and/or controlled such that the at least one radiofrequency signal (201, 202) is able to be received by the first user equipment (21) and/or by the second user equipment (22),
wherein especially a first reconfigurable intelligent surface (251) or a first conventional reflector or a first reflective surface is used such that the radiofrequency signal (201, 202) is able to be received by the first user equipment (21) and/or a second reconfigurable intelligent surface (252) or a second conventional reflector or a second reflective surface is used such that the radiofrequency signal (201, 202) is able to be received by the second user equipment (22).

3. Method according to one of the preceding claims, wherein, in a third step preceding the first step, the antenna entity or functionality (111) is controlled or configured such that the transmission power of the second antenna lobe (242) relative to the transmission power of the first antenna lobe (241) is sufficient to provide radio coverage to the second user equipment (22), either by means of providing such radio coverage directly or by means of via the second reconfigurable intelligent surface (252) or the second conventional reflector or the second reflective surface,
wherein especially the angular distribution of transmitted power of the first and second antenna lobe (241) is modified.

4. Method according to one of the preceding claims, wherein the first antenna lobe (241) corresponds to the main lobe of the antenna entity or functionality (111) and wherein the second antenna lobe (242) corresponds to a side lobe of the antenna entity or functionality (111),
wherein the peak transmitted power of the first antenna lobe (241) exceeds the peak transmitted power of the second antenna lobe (242), wherein especially the ratio of peak transmitted power of the first antenna lobe (241) and peak transmitted power of the second antenna lobe (242) is comprised between 20 and 1, preferably between 10 and 1, more preferably between 7 and 1, still more preferably between 5 and 1, still more preferably between 4 and 1, still more preferably between 3 and 1.

5. Method according to one of the preceding claims, wherein the first and second antenna lobes (241, 242) correspond to two main lobes of the antenna entity or functionality (111),
wherein the peak transmitted power of the first antenna lobe (241) is roughly equal to the peak transmitted power of the second antenna lobe (242).

6. Method according to one of the preceding claims, wherein the antenna entity or functionality (111) and/or at least the first and/or second reconfigurable intelligent surface (251, 252) and/or the first and/or second conventional reflector and/or the first and/or second reflective surface are controlled or configured - especially realizing phase shifting of the at least one radiofrequency signal (201, 202) by means of the first and/or second reconfigurable intelligent surface (251, 252) and/or the first and/or second conventional reflector and/or the first and/or second reflective surface - such that radio coverage is provided, using both the first and second antenna lobes (241, 242) and especially with at least the first and/or second reconfigurable intelligent surface (251, 252) and/or the first and/or second conventional reflector and/or the first and/or second reflective surface, to the first and second user equipments (21, 22),
wherein especially such controlling and/or configuring of the antenna entity or functionality (111) and/or of at least the first and/or second reconfigurable intelligent surface (251, 252) and/or the first and/or second conventional reflector and/or the first and/or second reflective surface is realized using artificial intelligence mechanisms, especially machine learning algorithms, especially comprising supervised learning and/or unsupervised learning and/or reinforcement learning.

7. Method according to one of the preceding claims, wherein the antenna entity or functionality (111) and/or at least the first and/or second reconfigurable intelligent surface (251, 252) and/or the first and/or second conventional reflector and/or the first and/or second reflective surface are controlled or configured such that, at a specific location of the first and/or the second user equipment (21, 22),
-- either a constructive interference of the at least one radiofrequency signal (201, 202) using at least the first antenna lobe (241) and the second antenna lobe (242),
-- or a destructive interference of the at least one radiofrequency signal (201, 202) using at least the first antenna lobe (241) and the second antenna lobe (242),
is realized.

8. Method according to one of the preceding claims, wherein the antenna entity or functionality (111) is able to receive, from the first and/or second user equipment (21, 22), at least one further radiofrequency signal (203, 204) using at least the first antenna lobe (241) and the second antenna lobe (242).

9. User equipment (22) for receiving at least one radiofrequency signal (201, 202) from an antenna entity or functionality (111) of a mobile communication network (100) in view of the mobile communication network (100) providing communication services to the user equipment (22),
wherein the antenna entity or functionality (111) is able to transmit the at least one radiofrequency signal (201, 202) using at least a first antenna lobe (241) and a second antenna lobe (242),
wherein, in order to receive the at least one radiofrequency signal (201, 202) from the antenna entity or functionality (111), the user equipment (22) is configured such that:
-- the at least one radiofrequency signal (201, 202) is transmitted, using the first antenna lobe (241) and the second antenna lobe (242), by the antenna entity or functionality (111) and received by the user equipment (22),
-- the user equipment (22) receives the at least one radiofrequency signal (201, 202) transmitted by means of the second antenna lobe (242) or by means of the first antenna lobe (241) and the second antenna lobe (242).

10. Antenna entity or functionality (111) for the transmission of at least one radiofrequency signal (201, 202) between, on the one hand, the antenna entity or functionality (111) of a mobile communication network (100), and, on the other hand, a first and a second user equipment (21, 22), in view of the mobile communication network (100) providing communication services to the first and second user equipment (21, 22),
wherein the antenna entity or functionality (111) is able to transmit the at least one radiofrequency signal (201, 202) using at least a first antenna lobe (241) and a second antenna lobe (242),
wherein, in order to transmit the at least one radiofrequency signal (201, 202) between the antenna entity or functionality (111) and the first and second user equipment (21, 22), the antenna entity or functionality (111) is configured such that:
-- the antenna entity or functionality (111) transmits the at least one radiofrequency signal (201, 202), thereby using the first antenna lobe (241) and the second antenna lobe (242),
-- both the first user equipment (21) and the second user equipment (22) receive the same at least one radiofrequency signal (201, 202), the first user equipment (21) receiving the at least one radiofrequency signal (201, 202) transmitted by means of the first antenna lobe (241) and the second user equipment (22) receiving the at least one radiofrequency signal (201, 202) transmitted by means of the second antenna lobe (242) or by means of the first antenna lobe (241) and the second antenna lobe (242).

11. System or mobile communication network (100) for the transmission and reception of at least one radiofrequency signal (201, 202) between, on the one hand, an antenna entity or functionality (111) of a mobile communication network (100), and, on the other hand, a first and a second user equipment (21, 22), in view of the mobile communication network (100) providing communication services to the first and second user equipment (21, 22), wherein the antenna entity or functionality (111) is able to transmit the at least one radiofrequency signal (201, 202) using at least a first antenna lobe (241) and a second antenna lobe (242),
wherein, in order to transmit the at least one radiofrequency signal (201, 202) between the antenna entity or functionality (111) and the first and second user equipment (21, 22), the system or mobile communication network (100) is configured such that:
-- the antenna entity or functionality (111) transmits the at least one radiofrequency signal (201, 202), thereby using the first antenna lobe (241) and the second antenna lobe (242),
-- both the first user equipment (21) and the second user equipment (22) receive the same at least one radiofrequency signal (201, 202), the first user equipment (21) receiving the at least one radiofrequency signal (201, 202) transmitted by means of the first antenna lobe (241) and the second user equipment (22) receiving the at least one radiofrequency signal (201, 202) transmitted by means of the second antenna lobe (242) or by means of the first antenna lobe (241) and the second antenna lobe (242).

12. Program comprising a computer readable program code, which, when executed on a computer and/or on an antenna entity or functionality (111) of a mobile communication network (100) and/or on a base station entity (111) of a mobile communication network (100) and/or on a network node of a mobile communication network (100), or in part on an antenna entity or functionality (111) and/or in part on a base station entity (111) and/or in part on a network node of a mobile communication network (100), causes the computer and/or the antenna entity or functionality (111) and/or the base station entity (111) and/or the network node of the mobile communication network (100) to perform a method according one of claims 1 to 8.

13. Computer-readable medium comprising instructions which when executed on a computer and/or on an antenna entity or functionality (111) of a mobile communication network (100) and/or on a base station entity (111) of a mobile communication network (100) and/or on a network node of a mobile communication network (100), or in part on an antenna entity or functionality (111) and/or in part on a base station entity (111) and/or in part on a network node of a mobile communication network (100), causes the computer and/or the antenna entity or functionality (111) and/or the base station entity (111) and/or the network node of the mobile communication network (100) to perform a method according one of claims 1 to 8.

## Amended claims

### Amended claims in accordance with Rule 137(2) EPC.

1. Method for the transmission and reception of at least one radiofrequency signal (201, 202) between, on the one hand, an antenna entity or functionality (111) of a mobile communication network (100), and, on the other hand, a first and a second user equipment (21, 22), in view of the mobile communication network (100) providing communication services to the first and second user equipment (21, 22),
wherein the antenna entity or functionality (111) is able to transmit the at least one radiofrequency signal (201, 202) using at least a first antenna lobe (241) and a second antenna lobe (242), wherein the first antenna lobe (241) corresponds to the main lobe of the antenna entity or functionality (111) and wherein the second antenna lobe (242) corresponds to a side lobe of the antenna entity or functionality (111), wherein the peak transmitted power of the first antenna lobe (241) exceeds the peak transmitted power of the second antenna lobe (242),
wherein, in order to transmit the at least one radiofrequency signal (201, 202) between the antenna entity or functionality (111) and the first and second user equipment (21, 22), the method comprises the following steps:
-- in a first step, the antenna entity or functionality (111) transmits the at least one radiofrequency signal (201, 202), thereby using the first antenna lobe (241) and the second antenna lobe (242),
-- in a second step, both the first user equipment (21) and the second user equipment (22) receive the same at least one radiofrequency signal (201, 202), the first user equipment (21) receiving the at least one radiofrequency signal (201, 202) transmitted by means of the first antenna lobe (241) and the second user equipment (22) receiving the at least one radiofrequency signal (201, 202) transmitted by means of the second antenna lobe (242) or by means of the first antenna lobe (241) and the second antenna lobe (242), wherein the transmission and reception of the at least one radiofrequency signal (201, 202) involves using conventional reflectors or reflective surfaces and/or at least one reconfigurable intelligent surface, RIS, (251, 252), wherein the conventional reflector or reflective surface and/or the at least one reconfigurable intelligent surface (251, 252) is able to be located and/or controlled such that the at least one radiofrequency signal (201, 202) is able to be received by the second user equipment (22).

2. Method according to claim 1, wherein a first reconfigurable intelligent surface (251) or a first conventional reflector or a first reflective surface is used such that the radiofrequency signal (201, 202) is able to be received by the first user equipment (21) and/or a second reconfigurable intelligent surface (252) or a second conventional reflector or a second reflective surface is used such that the radiofrequency signal (201, 202) is able to be received by the second user equipment (22).

3. Method according to one of the preceding claims, wherein, in a third step preceding the first step, the antenna entity or functionality (111) is controlled or configured such that the transmission power of the second antenna lobe (242) relative to the transmission power of the first antenna lobe (241) is sufficient to provide radio coverage to the second user equipment (22), either by means of providing such radio coverage directly or by means of via the second reconfigurable intelligent surface (252) or the second conventional reflector or the second reflective surface,
wherein especially the angular distribution of transmitted power of the first and second antenna lobe (241) is modified.

4. Method according to one of the preceding claims, wherein the ratio of peak transmitted power of the first antenna lobe (241) and peak transmitted power of the second antenna lobe (242) is comprised between 20 and 1, preferably between 10 and 1, more preferably between 7 and 1, still more preferably between 5 and 1, still more preferably between 4 and 1, still more preferably between 3 and 1.

5. Method according to one of the preceding claims, wherein the first and second antenna lobes (241, 242) correspond to two main lobes of the antenna entity or functionality (111),
wherein the peak transmitted power of the first antenna lobe (241) is roughly equal to the peak transmitted power of the second antenna lobe (242).

6. Method according to one of the preceding claims, wherein the antenna entity or functionality (111) and/or at least the first and/or second reconfigurable intelligent surface (251, 252) and/or the first and/or second conventional reflector and/or the first and/or second reflective surface are controlled or configured - especially realizing phase shifting of the at least one radiofrequency signal (201, 202) by means of the first and/or second reconfigurable intelligent surface (251, 252) and/or the first and/or second conventional reflector and/or the first and/or second reflective surface - such that radio coverage is provided, using both the first and second antenna lobes (241, 242) and especially with at least the first and/or second reconfigurable intelligent surface (251, 252) and/or the first and/or second conventional reflector and/or the first and/or second reflective surface, to the first and second user equipments (21, 22),
wherein especially such controlling and/or configuring of the antenna entity or functionality (111) and/or of at least the first and/or second reconfigurable intelligent surface (251, 252) and/or the first and/or second conventional reflector and/or the first and/or second reflective surface is realized using artificial intelligence mechanisms, especially machine learning algorithms, especially comprising supervised learning and/or unsupervised learning and/or reinforcement learning.

7. Method according to one of the preceding claims, wherein the antenna entity or functionality (111) and/or at least the first and/or second reconfigurable intelligent surface (251, 252) and/or the first and/or second conventional reflector and/or the first and/or second reflective surface are controlled or configured such that, at a specific location of the first and/or the second user equipment (21, 22),
-- either a constructive interference of the at least one radiofrequency signal (201, 202) using at least the first antenna lobe (241) and the second antenna lobe (242),
-- or a destructive interference of the at least one radiofrequency signal (201, 202) using at least the first antenna lobe (241) and the second antenna lobe (242),
is realized.

8. Method according to one of the preceding claims, wherein the antenna entity or functionality (111) is able to receive, from the first and/or second user equipment (21, 22), at least one further radiofrequency signal (203, 204) using at least the first antenna lobe (241) and the second antenna lobe (242).

9. Antenna entity or functionality (111) for the transmission of at least one radiofrequency signal (201, 202) between, on the one hand, the antenna entity or functionality (111) of a mobile communication network (100), and, on the other hand, a first and a second user equipment (21, 22), in view of the mobile communication network (100) providing communication services to the first and second user equipment (21, 22),
wherein the antenna entity or functionality (111) is able to transmit the at least one radiofrequency signal (201, 202) using at least a first antenna lobe (241) and a second antenna lobe (242), wherein the first antenna lobe (241) corresponds to the main lobe of the antenna entity or functionality (111) and wherein the second antenna lobe (242) corresponds to a side lobe of the antenna entity or functionality (111), wherein the peak transmitted power of the first antenna lobe (241) exceeds the peak transmitted power of the second antenna lobe (242),
wherein, in order to transmit the at least one radiofrequency signal (201, 202) between the antenna entity or functionality (111) and the first and second user equipment (21, 22), the antenna entity or functionality (111) is configured such that:
-- the antenna entity or functionality (111) transmits the at least one radiofrequency signal (201, 202), thereby using the first antenna lobe (241) and the second antenna lobe (242),
-- both the first user equipment (21) and the second user equipment (22) receive the same at least one radiofrequency signal (201, 202), the first user equipment (21) receiving the at least one radiofrequency signal (201, 202) transmitted by means of the first antenna lobe (241) and the second user equipment (22) receiving the at least one radiofrequency signal (201, 202) transmitted by means of the second antenna lobe (242) or by means of the first antenna lobe (241) and the second antenna lobe (242), wherein the transmission and reception of the at least one radiofrequency signal (201, 202) involves using conventional reflectors or reflective surfaces and/or at least one reconfigurable intelligent surface, RIS, (251, 252), wherein the conventional reflector or reflective surface and/or the at least one reconfigurable intelligent surface (251, 252) is able to be located and/or controlled such that the at least one radiofrequency signal (201, 202) is able to be received by the second user equipment (22).

10. System or mobile communication network (100) for the transmission and reception of at least one radiofrequency signal (201, 202) between, on the one hand, an antenna entity or functionality (111) of a mobile communication network (100), and, on the other hand, a first and a second user equipment (21, 22) , in view of the mobile communication network (100) providing communication services to the first and second user equipment (21, 22), wherein the antenna entity or functionality (111) is able to transmit the at least one radiofrequency signal (201, 202) using at least a first antenna lobe (241) and a second antenna lobe (242), wherein the first antenna lobe (241) corresponds to the main lobe of the antenna entity or functionality (111) and wherein the second antenna lobe (242) corresponds to a side lobe of the antenna entity or functionality (111), wherein the peak transmitted power of the first antenna lobe (241) exceeds the peak transmitted power of the second antenna lobe (242),
wherein, in order to transmit the at least one radiofrequency signal (201, 202) between the antenna entity or functionality (111) and the first and second user equipment (21, 22), the system or mobile communication network (100) is configured such that:
-- the antenna entity or functionality (111) transmits the at least one radiofrequency signal (201, 202), thereby using the first antenna lobe (241) and the second antenna lobe (242),
-- both the first user equipment (21) and the second user equipment (22) receive the same at least one radiofrequency signal (201, 202), the first user equipment (21) receiving the at least one radiofrequency signal (201, 202) transmitted by means of the first antenna lobe (241) and the second user equipment (22) receiving the at least one radiofrequency signal (201, 202) transmitted by means of the second antenna lobe (242) or by means of the first antenna lobe (241) and the second antenna lobe (242), wherein the transmission and reception of the at least one radiofrequency signal (201, 202) involves using conventional reflectors or reflective surfaces and/or at least one reconfigurable intelligent surface, RIS, (251, 252), wherein the conventional reflector or reflective surface and/or the at least one reconfigurable intelligent surface (251, 252) is able to be located and/or controlled such that the at least one radiofrequency signal (201, 202) is able to be received by the second user equipment (22).

11. Program comprising a computer readable program code, which, when executed on a computer and/or on an antenna entity or functionality (111) of a mobile communication network (100) and/or on a base station entity (111) of a mobile communication network (100) and/or on a network node of a mobile communication network (100), or in part on an antenna entity or functionality (111) and/or in part on a base station entity (111) and/or in part on a network node of a mobile communication network (100), causes the computer and/or the antenna entity or functionality (111) and/or the base station entity (111) and/or the network node of the mobile communication network (100) to perform a method according one of claims 1 to 8.

12. Computer-readable medium comprising instructions which when executed on a computer and/or on an antenna entity or functionality (111) of a mobile communication network (100) and/or on a base station entity (111) of a mobile communication network (100) and/or on a network node of a mobile communication network (100), or in part on an antenna entity or functionality (111) and/or in part on a base station entity (111) and/or in part on a network node of a mobile communication network (100), causes the computer and/or the antenna entity or functionality (111) and/or the base station entity (111) and/or the network node of the mobile communication network (100) to perform a method according one of claims 1 to 8.
